# EUROPEAN PATENT SPECIFICATION

(11) **EP 4 236 734 B1**
(45) Date of publication and mention of the grant of the patent: **14.05.2025**
(21) Application number: 21810499.0
(22) Date of filing: 26.10.2021
(51) Int. Cl.: A47J 31/44

(54) **LIQUID SUPPLY TANK SENSING ARRANGEMENT FOR BEVERAGE MACHINE**
SENSORANORDNUNG FÜR FLÜSSIGKEITSZUFUHRTANK FÜR GETRÄNKEMASCHINE
AGENCEMENT DE DÉTECTION DE RÉSERVOIR D'ALIMENTATION EN LIQUIDE POUR MACHINE À BOISSON

(30) Priority: 28.10.2020 US 202063106795 P
(43) Date of publication of application: 06.09.2023
(73) Proprietor: Keurig Green Mountain, Inc., Burlington, MA 01803 (US)
(72) Inventor: GENG, Chang, Shenzhen, Guangdong 518055 (CN); ZHONG, Fayong, Burlington, MA 01803 (US); MA, Congxing, Burlington, MA 01803 (US); XU, Zheng, Burlington, MA 01803 (US)
(74) Representative: HGF
(86) International application number: PCT/US2021/056613
(87) International publication number: WO 2022/093795

(56) References cited:
- EP-A1- 1 514 500
- EP-A1- 2 702 908
- WO-A1-2016/189800
- CN-A- 110 200 502
- US-A1- 2006 288 776
- US-A1- 2015 129 039

## Description

### FIELD

The present invention relates to beverage machines, such as coffee brewers that use a liquid to form a coffee beverage.

### BACKGROUND

Beverage machines frequently employ a level sensor to detect a liquid fill level of a liquid supply tank, e.g. to help ensure that there is sufficient liquid in the liquid supply tank for a beverage cycle. As an example, some coffee brewers use a level sensor positioned to contact liquid in the liquid supply tank to detect the fill level of the tank, and to control a beverage cycle accordingly.

### SUMMARY

Level sensors used to detect liquid fill level of a liquid supply tank are typically positioned in the liquid supply tank itself. This positioning helps the level sensor obtain a direct measurement of the liquid level in the liquid supply tank. For example, some coffee machines employ a first conductive probe positioned at a low level height within a liquid supply tank and a second conductive probe positioned at a high level height within the liquid supply tank. The first conductive probe is used to sense presence of water in the tank at the lowest permissible level, and the second conductive probe is used to sense presence of water in the tank at the highest permissible level. The second conductive probe may be used to assist with drawing a precise volume of liquid from the tank, e.g. in conjunction with a siphon.

Some coffee machines have a removable liquid supply tank, and include a dedicated sensor to detect presence or absence of the liquid supply tank. For example, a coffee machine may use a proximity sensor or a mechanical switch to detect presence or absence of the liquid supply tank.

The inventor(s) have appreciated that in some cases, it is desirable to position a sensor outside of a liquid supply tank to detect tank fill level. Such positioning can allow the liquid supply tank to be disconnected and removed from the beverage machine, e.g. for ease of refill of the tank, without needing an arrangement that also allows for disconnection and reconnection of a level sensor. The inventor(s) have also appreciated that a sensor positioned outside of a liquid supply tank can be used to detect both a low fill level of the tank and a disconnection of the tank. As such, the beverage machine can detect that the liquid supply tank has been removed without needing an additional sensor that is specifically dedicated to detecting presence or absence of the liquid supply tank.

CN110200502 relates to an instant heating water-drinking device. EP1514500 relates to a beverage preparation device.

In some embodiments of this disclosure, a sensor may be configured to detect both disconnection of a liquid supply tank, and when a liquid fill level of the liquid supply tank is below a threshold level, e.g., too low to complete formation of a beverage. The sensor may be configured to detect a presence/absence of liquid in a conduit that is in fluid communication with the liquid supply tank. The sensor detecting an absence of liquid in the conduit may be indicative of either the liquid supply tank being disconnected, or a liquid fill level in the liquid supply tank being below a threshold level. The sensor may be positioned in a liquid supply line, or in a conduit that is in fluid communication with the liquid supply tank, but is separate and distinct from the liquid supply line.

According to one aspect not covered by the present claims, a beverage machine is provided. The beverage machine may include a liquid supply tank configured to hold a liquid for forming a beverage. The beverage machine may also include a conduit that is fluidly coupled to the liquid supply tank and positioned such that, for at least some fill levels of the liquid supply tank, prior to initiation of a beverage cycle, a liquid level in the conduit corresponds to a liquid level in the liquid supply tank. The beverage machine may also include a conductive probe positioned within the conduit and at a level in the conduit to detect presence and absence of liquid at the level in the conduit, the level being located at a vertical height that is between a bottom of the liquid supply tank and a maximum fill level of the liquid supply tank.

According to the invention, a beverage machine according to claim 1 is provided.

According to another aspect not covered by the present claims, a beverage machine is provided. The beverage machine may include a liquid supply tank configured to hold a liquid for forming a beverage, the liquid supply tank having a disconnected state and a connected state. The beverage machine may include a conduit that is external to and fluidly coupled to the liquid supply tank when the liquid supply tank is in the connected state. The beverage machine may include a sensor configured to detect presence and absence of liquid at a level in the conduit in order to detect disconnection of the liquid supply tank and to detect that a liquid level in the liquid supply tank is below a threshold level.

These and other aspects of the disclosure will be apparent from the following description and claims. It should be appreciated that the foregoing concepts, and additional concepts discussed below, may be arranged in any suitable combination, as the present disclosure is not limited in this respect. Further, other advantages and novel features of the present disclosure will become apparent from the following detailed description of various non-limiting embodiments when considered in conjunction with the accompanying figures.

### BRIEF DESCRIPTION OF DRAWINGS

In the drawings, each identical or nearly identical component that is illustrated in various figures may be represented by a like numeral. For purposes of clarity, not every component may be labeled in every drawing. In the drawings:
FIG. 1 is a perspective view of a beverage machine in an illustrative embodiment;
FIG. 2 is schematic diagram of selected components of the beverage machine in an illustrative embodiment;
FIG. 3 is schematic diagram of selected components of the beverage machine in another illustrative embodiment; and
FIG. 4 is a diagram of a plurality of conductive probes extending into a conduit.

### DETAILED DESCRIPTION

It should be understood that aspects of the disclosure are described herein with reference to certain illustrative embodiments and the figures. The illustrative embodiments described herein are not necessarily intended to show all aspects of the disclosure, but rather are used to describe a few illustrative embodiments. Thus, aspects of the disclosure are not intended to be construed narrowly in view of the illustrative embodiments. In addition, aspects of the disclosure may be used alone or in any suitable combination with other aspects of the disclosure.

Generally speaking, a beverage machine may be used to form any suitable beverage, such as tea, coffee, other infusion-type beverages, beverages formed from a liquid or powdered concentrate, soups, juices or other beverages made from dried materials, carbonated or uncarbonated beverages. The beverage machine can form such beverages using a base liquid, such as water, stored in a liquid supply tank. A beverage machine can be capable of forming a variety of beverages, each requiring a different amount of the base liquid. Thus, it may be desirable for a beverage machine to include features that allow the beverage machine to detect one or more physical characteristics of the liquid, e.g., detect a liquid level in the liquid supply tank, detect that liquid is available for use and/or is being provided to the machine components, detect a temperature of the liquid, etc. As discussed in more detail below, in some embodiments a beverage machine can include a sensor that detects both disconnection of a liquid supply tank, and a liquid fill level in the liquid supply tank being above or below a threshold level, e.g., too low for beverage formation. This can allow a single sensor to detect two different potential error states and assist in appropriate control of the beverage machine.

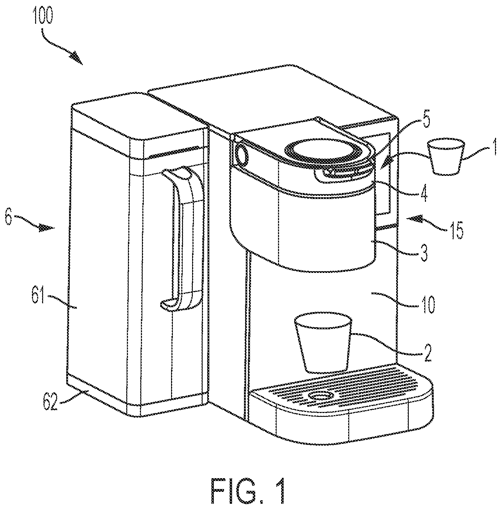

FIG. 1 shows a perspective view of a beverage machine 100 that incorporates features of this disclosure. In this illustrative embodiment, the machine 100 is arranged to form coffee or tea beverages. As is known in the art, a beverage cartridge 1 may be provided to the system 100 and used to form a beverage that is deposited into a user's cup or other suitable container 2. The cartridge 1 may be manually or automatically placed in a brew chamber of a beverage dispensing station 15 that in some embodiments includes a cartridge holder 3 and cover 4 of the beverage machine 100. For example, the holder 3 may be or include a circular, cup-shaped or otherwise suitably shaped opening in which the cartridge 1 may be placed. With a cartridge 1 placed in the cartridge holder 3, a handle 5 may be moved by hand (e.g., downwardly) so as to move the cover 4 to a closed position (as shown in FIG. 1). In the closed position, the cover 4 at least partially covers the cartridge 1, which is at least partially enclosed in a space in which the cartridge is used to make a beverage. For example, with the cartridge 1 held by the cartridge holder 3 in the closed position, water or other liquid may be provided to the cartridge 1 (e.g., by injecting the liquid into the cartridge interior) to form a beverage that exits the cartridge 1 and is provided to a cup 2 or other container. Of course, aspects of the disclosure may be employed with any suitably arranged system 100, including drip-type coffee brewers, carbonated beverage machines, and other systems that deliver water or other liquid to form a beverage. Thus, a cartridge 1 need not necessarily be used, but instead the beverage dispensing station 15 can accept loose coffee grounds or other beverage material to make a beverage. Also, the dispensing station 15 need not necessarily include a cartridge holder 3 and a cover 4. For example, dispensing station 15 can include a filter basket that is accessible to provide beverage material (such as loose coffee grounds), and the filter basket itself may be movable, e.g., by sliding engagement with the beverage machine housing 10, and a cover 4 may be fixed in place. In other embodiments, the dispensing station 15 need not be user accessible, but instead beverage material may be automatically provided to, and removed from, the dispensing station 15. Moreover, the system 100 need not have a brew chamber, but instead other types of dispensing stations, e.g., that dispense hot and/or cold water (whether still or carbonated) at an outlet such as a dispensing nozzle without mixing with any beverage ingredient. Accordingly, a wide variety of different types and configurations for a dispensing station may be employed with aspects of this disclosure.

In some embodiments, the beverage machine 100 uses liquid, such as water, that is provided by a liquid supply 6 to form a beverage. In some embodiments, the liquid supply 6 can include a tank 61 arranged to hold water or other liquid. The tank 61 may have a disconnected state and a connected state. In some embodiments, the tank 61 can be removably supported on a base 62, which fluidly couples to a port on a bottom of the tank 61 to receive and deliver liquid to other components of the machine 100, such as the dispensing station 15. A removable tank 61 can be convenient for a user because the user can remove the tank 61 from the base 62, e.g., by grasping a handle on the tank 61, for filling and then replace the tank 61 on the base 62. This is just one example, however, and a machine 100 can receive and/or store liquid in other ways. For example, the machine 100 can have a connection to a mains water supply (e.g., so-called "city water" or a line that delivers water under pressure to the machine 100), can have an internal or non-removable liquid supply tank or reservoir, or other.

In some embodiments, the machine 100 has one or more sensor components, and some of those components may detect conditions of the liquid supply tank 61, such as disconnection of the liquid supply tank from the beverage machine, and whether a fill level in the liquid supply tank 61 is above or below a threshold, e.g., too low for beverage formation. Such sensor components can be part of a sensor circuit that is electrically powered and used by a machine controller to detect the condition of the liquid supply tank 61 and control the machine 100 accordingly. As an example, a controller can use an absence of liquid signal from a sensor circuit to provide an indication to a user that water needs to be added to the tank 61 and/or the tank 61 needs to be connected to the beverage machine.

In some embodiments, for example, the beverage machine 100 can have a sensor component arranged to detect the presence or absence of liquid in a conduit that is in fluid communication with the liquid supply tank. In some embodiments, the conduit is a supply line that supplies liquid from the liquid supply tank toward a dispensing station of the beverage machine. In some embodiments, in contrast, the conduit with which the sensor component is associated is separate and distinct from a supply line.

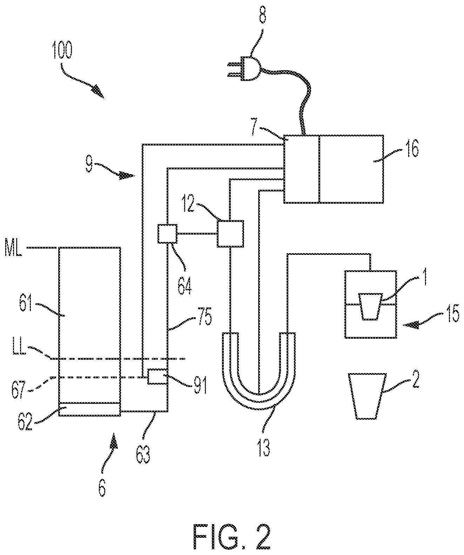

FIG. 2 shows a schematic diagram of selected beverage machine 100 components in one embodiment that employs a sensor circuit 9 that has a sensor component 91 arranged to detect the occurrence of two different conditions of the liquid supply tank 61. In this example, the sensor includes at least one conductive probe arranged to contact liquid in a conduit 75 that is part of the supply line 63. The supply line 63 may be fluidly coupled to the tank 61 (e.g. via a port at a bottom of the tank 61) and may be arranged to supply liquid from the tank 61 toward a dispensing station 15. In some embodiments, the supply line 63 may be arranged to deliver liquid to a pump 12. In some embodiments, the pump 12 may be positioned to move liquid from the liquid supply tank 61 to the sensor component 91. The pump 12 can have an inlet fluidly coupled to the supply line 63 to receive liquid from the tank 61, and can deliver the liquid via an outlet to a heater 13 (or other liquid conditioner such as a chiller, carbonator, etc. that is fluidly coupled to the pump outlet), which heats (cools, carbonates, etc.) the liquid that is subsequently delivered to the dispensing station 15. In some embodiments, the heater 13 is an in-line heater. In FIG. 2, the sensor component 91 is shown between the tank 61 and the pump 12 (i.e., downstream of the tank 61 and upstream of the pump 12), but, in embodiments not covered by the present claims, the sensor (or other additional sensors) can be located in other places, such as between the pump 12 and heater 13 (i.e., downstream of the pump 12 and upstream of the heater 13), downstream of the heater 13, etc.

According to the invention, the sensor component 91 is configured to detect the presence or absence of liquid in the supply line 63. The sensor component 91 detecting an absence of liquid may indicate that the tank 61 is disconnected from the machine 100, has an exhausted liquid supply and/or that a liquid level in the tank 61 is below a threshold level. In the arrangement of FIG. 2, the supply line 63 is fluidly coupled to the bottom of the tank 61 and extends upwardly, e.g., above a maximum fill level ML of the tank 61. Since the sensor component 91 is arranged in the supply line 63, this can allow the sensor component 91 to detect whether liquid is present at least at one location in the line 63, e.g., whether liquid is present in the line 63 above or below the sensor component 91 location. In some cases, the sensor component 91 can detect whether a liquid level LL of liquid in the supply line 63 is above or below a location of the sensor component 91 along the supply line 63. This can allow a determination of whether a liquid level LL in the tank 61 is below a threshold level, such as a minimum level required to dispense a beverage. The supply line 63 includes a vent 64 arranged to vent the supply line 63 to atmospheric or other ambient pressure. The vent may, in some embodiments, have an opened configuration and a closed configuration. For example, the vent 64 can include an electrically-operated valve that a controller 16 can open to expose the supply line 63 to ambient pressure. In some cases, the vent 64 can be positioned above the maximum fill level ML and/or above a position of the sensor component 91. Venting of the supply line 63 can allow the liquid level in the supply line 63 to correspond to (e.g., is the same as) the liquid level LL in the tank 61.

In some embodiments, the maximum fill level ML of the tank 61 may be at a first height, and the pump 12 may be positioned at a second height that is above the first height, as shown in FIG. 2.

In some embodiments, the tank 61 may have a low-level threshold 67 corresponding to a minimum amount of liquid volume required to form a beverage or otherwise run a beverage cycle. When the liquid level LL in the tank 61 falls below the low-level threshold 67, the volume of liquid in the tank 61 may be too low to form a beverage or otherwise run a beverage cycle. The sensor component 91 may be located at or otherwise detect presence/absence of liquid at a height in the supply line 63 that is the same height as the low-level threshold 67 in the tank 61.

If the supply line 63 is vented and the sensor component 91 detects the presence of liquid, the controller 16 can determine that the liquid level LL in the tank 61 is above the position or height of the sensor component 91 (e.g., above a low-level threshold 67), and if the sensor component 91 does not detect the presence of liquid (i.e., detects the absence of liquid), the controller 16 can determine that the liquid level LL in the tank 61 is below the position or height of the sensor component 91 or that the tank 61 is disconnected from the supply line 63. (In some embodiments, the beverage machine need not include a valve for the vent 64. For example, the vent 64 can have a permanently open orifice or other opening of suitable size to always vent the supply line 63 to atmosphere. The vent 64 opening sized can be arranged relative to the pump capacity such that the pump can deliver liquid for beverage formation even though air may be drawn into the vent 64.)

In some embodiments, the pump 12 is located at or above the maximum fill level ML of the tank 61 or at least downstream of the location of the sensor component 91 along the supply line 63. This arrangement can allow a determination of whether liquid is being supplied to the pump 12 or not and can be useful to determine whether the tank 61 is disconnected from the machine 100 and/or a liquid supply in the tank 61 has been exhausted. For example, if the tank 61 is removed from the base 62 or runs out of liquid during operation of the pump 12 in drawing liquid from the tank 61, air will be drawn into the supply line 63 rather than liquid. When air reaches the sensor component 91, the sensor component 91 can detect the absence of liquid and thus that the tank 61 has been removed or the liquid supply exhausted. With the sensor component 91 upstream of the pump 12 and/or upstream of the heater 13, the sensor component 91 may be able to detect absence of liquid prior to air reaching the pump and/or the heater. This may help to avoid overheating of the heater and/or enable early deactivation of the heater, pump or other beverage making operation without requiring the pump to run additional cycles.

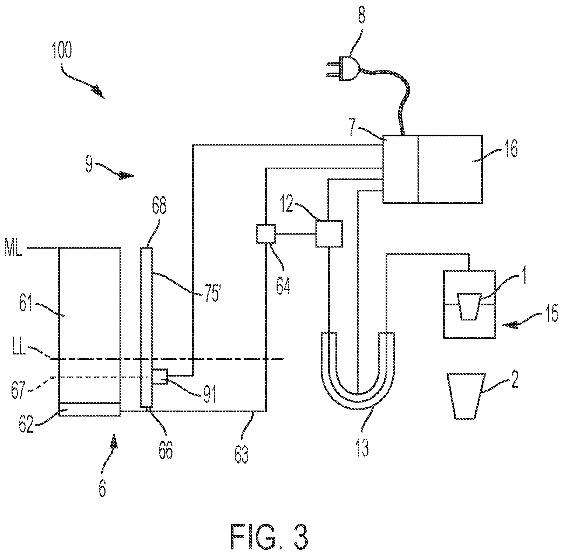

It should be appreciated that the sensor component may be located in other places besides the liquid supply line. FIG. 3 depicts an alternative illustrative embodiment not covered by the present claims, in which the sensor component 91 is arranged to detect the presence or absence of liquid in a conduit 75' that is separate and distinct from the liquid supply line 63 that supplies liquid from the tank 61 toward the dispensing station 15. The conduit 75' may serve as a reference vessel that is fluidly connected to the liquid supply tank 61 such that a liquid level in the conduit 75' corresponds to (e.g., is the same as) a liquid level in the tank 61. The conduit 75' may have a first end 66 that receives liquid from the tank 61 into the conduit 75', and a second, opposite end 68. In some embodiments, the second end 68 may be free from being fluidly connected to the supply line 63. The first end 66 may be at a bottom of the conduit 75' and the second end 68 may be at a top of the conduit. In some embodiments, liquid from the tank 61 may enter the conduit 75' through the first end 66, exit the conduit 75' back through the first end 66, and move into the liquid supply line 63.

In some embodiments, the conduit 75' may be vented to ambient pressure, e.g., in the form of a permanently open orifice, or a controllable vent that can be opened or closed. In some embodiments, the second end 68 of the conduit 75' may connect back to the tank 61, e.g. forming a loop.

As with the FIG. 2 embodiment, the tank 61 in the FIG. 3 embodiment may have a low-level threshold 67 corresponding to a minimum amount of liquid volume required to form a beverage or otherwise run a beverage cycle. The sensor component 91 may be located at or otherwise detect presence/absence of liquid at a height in the supply line 63 that is the same height as a low-level threshold 67 in the tank 61. If the sensor component 91 detects the presence of liquid, the controller 16 can determine that the liquid level LL in the tank 61 is above the position or height of the sensor component 91 (e.g., above a low-level threshold 67). If the sensor component does not detect the presence of liquid (i.e., detects the absence of liquid), the controller 16 can determine that the liquid level LL in the tank 61 is below the position or height of the sensor component 91 or that the tank 61 is disconnected from the supply line 63.

In the above embodiments, the controller 16 can control various components of the beverage machine 100 in different ways based on signals from the sensor. In some embodiments, the controller 16 can provide an indication to the user to add liquid to the tank 61 as well as shut down or reduce a heating rate of the heater 13 if the sensor component 91 detects the absence of liquid. The sensor component 91 can also provide an indication that the tank 61 is removed from the machine 100 if the sensor component 91 detects the absence of liquid while the pump 12 is drawing water from the tank 61. That is, if the tank 61 is removed as the pump 12 is pulling liquid from the supply line 63, liquid will no longer be provided to the inlet side of the supply line 63 and the pump 12 will empty the supply line 63. Once liquid is drawn past the sensor component 91, the sensor component 91 will no longer detect liquid, indicating that the tank 61 has been removed. In this case, the controller 16 can provide an indication to the user to replace the tank 61, stop pump and heater operation, etc.

As discussed above, in some embodiments, the sensor component of the beverage machine may comprise one or more conductive probes arranged to contact liquid in a conduit. In some embodiments, the sensor component comprises a plurality of conductive probes. For example, the sensor component may comprise 2, 3, 4, 5, or any other suitable number of conductive probes. Having a plurality of conductive probes may provide a back-up or redundancy in the event that a conductive probe should fail or otherwise function improperly, and/or may permit the use of different known sensing techniques. In addition, or alternately, multiple conductive probes positioned along a length of the conduit 75 can allow the controller 16 to detect the presence or absence of liquid at multiple locations along the length of the conduit 75. This can allow the controller 16 to detect multiple liquid levels for the tank 61, e.g., such that the controller 16 can determine a volume of liquid in the tank 61. As an example, each detected liquid level can correspond to a particular volume of liquid in the tank 61, and thus detection of a particular liquid level can indicate the volume of liquid in the tank 61.

For example, one of the conductive probes may use a baseline probe circuit characteristic to determine when the probe is out of contact with liquid, as discussed in U.S. Patent No. 7,360,418, incorporated by reference herein. In such an arrangement, a baseline probe circuit characteristic, e.g., a circuit resistance or voltage, is measured when the probe is out of contact with liquid. In one embodiment, the baseline characteristic may be compared to a circuit characteristic that is measured as liquid comes into contact with the probe. A difference between the baseline characteristic and the circuit characteristic may be used to determine whether or not the probe is in contact with the liquid.

Other known sensing techniques may be used by one or more of the conductive probes. For example, two conductive probes may be electrically insulated from each other except for a path through liquid present between the conductive probes. Thus, if water or other liquid is present between the conductive probes, a conductive path is established between the conductive probes, but no conductive path is present if liquid is not present between the conductive probes. This allows the sensor component to detect the presence or absence of liquid.

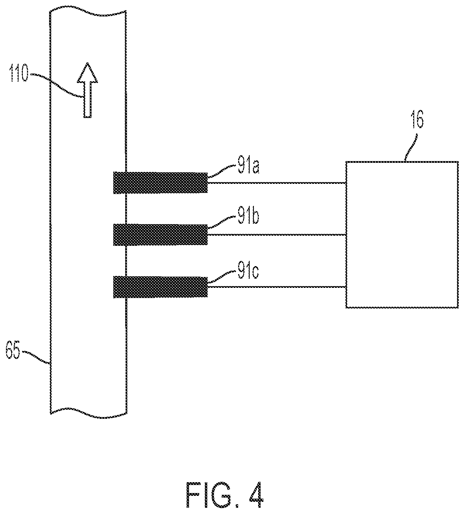

FIG. 4 shows an illustrative embodiment of a sensor component comprising a first conductive probe 91a, a second conductive probe 91b, and a third conductive probe 91c, each operatively coupled to a controller. A portion of the conductive probes 91a, 91b, 91c extend into a conduit 65. The conduit 65 shown in FIG. 4 could be the conduit 75 of the FIG. 2 embodiment, or the conduit 75' of the FIG. 3 embodiment, or a conduit of another arrangement. In some embodiments, the conductive probes extend into the conduit 65 in a direction perpendicular to a flow direction 110 through the conduit. The conduit 65 may be made of any suitable material such as silicone, elastomer, rubber, plastic, an insulative material, or a conductive material such as metal. In some embodiments, the conductive probes 91a, 91b, 91c are molded into the conduit 65 or otherwise coupled to the conduit via any suitable arrangement.

While the sensor component 91 in the FIG. 4 embodiment includes at least one conductive element that contacts the liquid to detect the presence or absence of liquid, the sensor component 91 can be arranged in different ways and/or to detect other physical characteristics of the liquid. For example, the sensor component 91 can include a thermistor or other sensor arranged to contact liquid to detect a temperature of the liquid, a sensor arrangement to detect conductivity, salinity or other characteristic of the liquid, etc. In some embodiments, the sensor component 91 may detect two or more characteristics of the liquid, such as temperature and presence/absence. As an example, one of the first, second or third conductive probes 91a, 91b, 91c of the sensor component in FIG. 4 could be replaced with a thermistor sensor that includes a conductive element arranged to contact liquid in the supply line 63 and the sensor component could function as a conductive probe as well as temperature sensing. Thus, the sensor component 91 can operate as both a temperature sensor and a liquid presence/absence detector. (Additional sensor circuit 9 components would likely be required to allow for sensing temperature in addition to liquid presence/absence, e.g., a power supply line and signal line for the thermistor portion.)

In some embodiments, the beverage machine may include a sensor configured to determine whether the pump is pumping liquid or gas. Such a sensor may enable the beverage machine to determine a volume of liquid present in the liquid supply tank. The sensor may be at or near the pump, and in some embodiments, may be integrated with the pump. In some embodiments, the sensor can detect pump voltage and/or current, and based on the measured voltage and/or current, determine when liquid arrives at the pump. As an example, the current draw by the pump may change when liquid arrives at the pump, e.g., the current draw may increase when the pump transitions from pumping gas to pumping water. The controller can use this change in voltage and/or current to detect when liquid arrives at the pump, and thus when the gas volume has been removed from the liquid supply line. In some embodiments, the sensor can be a conductive, capacitive, optical or other sensor that detects when liquid arrives at the pump or at some other location in the conduit, e.g., upstream of the pump. The sensor may be used in different arrangements to determine a volume of liquid present in the liquid supply tank, as discussed below.

For example, in some embodiments, the beverage machine may be configured to determine a volume of liquid in the liquid supply tank based on a gas volume in the liquid supply line at a start of a beverage cycle based on a number of pump cycles required to pump the gas volume out of the liquid supply line. The pump may be arranged to pump a particular volume of fluid (liquid or gas) for each pump operation cycle and/or for a particular operation time. By determining a number of pump cycles or operation time to pump gas from a conduit of a liquid supply line, the controller can determine a gas volume and/or the volume of liquid. A sensor may be used to detect pump operation cycles, e.g., revolutions of a pump shaft, cycles of a piston or other pump component, etc. Note that a single sensor component may be configured to determine whether the pump is pumping liquid or gas and may also be used to detect pump operation cycles. For example, in some embodiments, a sensor component can detect two or more characteristics of the system, such as pump cycles and the presence of liquid at a point in the liquid supply line, and may use two or more distinct sensors to do so, e.g., an infrared sensor to detect pump shaft revolutions and a conductive probe to detect liquid. In other embodiments, however, these sensors may be separated into distinct sensor components.

Sensor component(s) may be in electronic communication with the controller which can use information (e.g., one or more signals) from the sensor component(s) to determine the volume of gas in a conduit of the liquid supply line, a volume of liquid, or other features of the system.

As another example, in some embodiments, the beverage machine may be configured to determine the volume of liquid in the liquid supply tank based on an operation time of the pump required to pump the gas volume from the liquid supply line. The controller may be configured to measure the operation time of the pump when the sensor determines that the pump is pumping gas and to stop measuring the operation time of the pump when the sensor determines that the pump is pumping liquid.

Other operation parameters besides pump cycles and operation time may be tracked to determine volume of liquid in the liquid supply tank, such as instantaneous flow rate of fluid through pump, average flow rate of fluid through pump, etc. With any of the aforementioned approaches to determining liquid level, the controller may use an algorithm to calculate volume of liquid in the liquid supply tank, and/or a lookup table to determine the corresponding volume of liquid.

To initiate a beverage cycle, a user may first insert a cartridge 1 into the dispensing station 15 and provide an indication (e.g., by pressing a button or other suitable step) to beverage machine 100 to prepare a beverage. At or before this time, the controller 16 can monitor the sensor circuit 9 to assess whether liquid is present at the sensor component 91 or not and/or a temperature at the sensor component 91. If the supply line 63 is provided with a controllable vent 64, the controller 16 can open the vent valve 64 to help ensure that the liquid level in the supply line 63 is equal to the liquid level in the tank 61. If no liquid is detected, the controller 16 can stop beverage formation and provide an indication to the user, e.g., via a user interface on the housing 10, that water or other liquid must be added and/or the tank 61 replaced. If liquid is detected, the controller 16 can proceed with beverage formation, e.g., including closing the vent 64, operating the pump 12 to deliver liquid to the heater 13. During pump 12 operation, the controller 16 can monitor the sensor circuit 9 for the absence of liquid. If an absence of liquid is detected, the controller 16 can stop pump operation, heating and/or other functions, e.g., because the tank 61 may have been removed and/or a liquid supply in the tank 61 is exhausted. The controller 16 can provide an indication to a user via the user interface that the tank 61 should be replaced to begin or restart beverage dispensing.

In some embodiments, the sensor component 91 is arranged to determine tank 61 disconnection and/or exhausted liquid supply in the tank 61 without requiring pump operation. Prior to pump operation, the liquid level LL in the tank 61 may correspond with (e.g. be the same as) a liquid level in the conduit 75 in FIG. 2 (or 75' in FIG. 3). The sensor component 91 detecting absence of liquid may indicate that either the tank 61 is disconnected, or a liquid supply in the tank 61 is exhausted or otherwise below a low-level threshold 67. In some embodiments, when a user actuates a beverage cycle, the sensor component 91 may send a no-liquid detected signal to the controller 16, and the controller in turn may prohibit operation of the pump 12 and/or heater 13.

As noted above, operation of the pump 12, heater 13 and other components of the machine 100 may be controlled by the controller 16, which may include a programmed processor and/or other data processing device along with suitable software or other operating instructions, one or more memories (including non-transient storage media that may store software and/or other operating instructions), temperature and liquid level sensors, pressure sensors, input/output interfaces (such as a user interface on the housing 10), communication buses or other links, a display, switches, relays, triacs, or other components necessary to perform desired input/output or other functions. A user interface may be arranged in any suitable way and include any suitable components to provide information to a user and/or receive information from a user, such as buttons, a touch screen, a voice command module (including a microphone to receive audio information from a user and suitable software to interpret the audio information as a voice command), a visual display, one or more indicator lights, a speaker, and so on.

While aspects of the disclosure may be used with any suitable cartridge, or no cartridge at all, some cartridges may include features that enhance the operation of a beverage machine 100. As is known in the art, the cartridge 1 may take any suitable form such as those commonly known as a sachet, pod, capsule, container or other. For example, the cartridge 1 may include an impermeable outer covering within which is housed a beverage medium, such as roasted and ground coffee or other. The cartridge 1 may also include a filter so that a beverage formed by interaction of the liquid with the beverage medium passes through the filter before being dispensed into a cup 2. As will be understood by those of skill in the art, cartridges in the form of a pod having opposed layers of permeable filter paper encapsulating a beverage material may use the outer portion of the cartridge 1 to filter the beverage formed. The cartridge 1 in this example may be used in a beverage machine to form any suitable beverage such as tea, coffee, other infusion-type beverages, beverages formed from a liquid or powdered concentrate, etc. Thus, the cartridge 1 may contain any suitable beverage material, e.g., ground coffee, tea leaves, dry herbal tea, powdered beverage concentrate, dried fruit extract or powder, powdered or liquid concentrated bouillon or other soup, powdered or liquid medicinal materials (such as powdered vitamins, drugs or other pharmaceuticals, nutriaceuticals, etc.), and/or other beverage-making material (such as powdered milk or other creamers, sweeteners, thickeners, flavorings, and so on). In one illustrative embodiment, the cartridge 1 contains a beverage material that is configured for use with a machine that forms coffee and/or tea beverages, however, aspects of the disclosure are not limited in this respect.

Also, the disclosure may be embodied as a method, of which an example has been provided, such method is however not covered by the present claims. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

As used herein, "beverage" refers to a liquid substance intended for drinking that is formed when a liquid interacts with a beverage material, or a liquid that is dispensed without interacting with a beverage material. Thus, beverage refers to a liquid that is ready for consumption, e.g., is dispensed into a cup and ready for drinking, as well as a liquid that will undergo other processes or treatments, such as filtering or the addition of flavorings, creamer, sweeteners, another beverage, etc., before being consumed.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

The foregoing description and drawings are by way of example only.

## Claims

1. A beverage machine (100) comprising:
a liquid supply tank (61) configured to hold a liquid for forming a beverage;
a pump (12) fluidly coupled to the liquid supply tank (61);
a liquid supply line (63) configured to provide liquid from the liquid supply tank (61) to the pump (12); the beverage machine being **characterized by**
a vent (64) fluidly coupled to the liquid supply line (63) to vent at least a portion of the liquid supply line (63) to ambient pressure such that, for at least some fill levels of the liquid supply tank (61), a liquid level in the liquid supply line (63) is at a same height as a liquid level in the liquid supply tank (61); and
a sensor (91) configured to detect presence and absence of liquid in the liquid supply line (63).

2. The beverage machine of (100) claim 1, wherein the pump (12) is positioned at or above a maximum fill level of the liquid supply tank (61).

3. The beverage machine (100) of claim 1, wherein the vent (64) has an opened configuration and a closed configuration.

4. The beverage machine (100) of claim 1, wherein the vent (64) is a permanently open orifice.

5. The beverage machine (100) of claim 1, further comprising a controller (16) configured to determine the liquid level in the liquid supply tank (61) based on a gas volume in the liquid supply line (63) at a start of a beverage cycle based on a number of pump cycles required to pump the gas volume out of the liquid supply line (63), wherein the beverage machine includes a sensor (91) configured to determine whether the pump (12) is pumping liquid or gas.

6. The beverage machine (100) of claim 1, further comprising a controller (16) configured to determine the liquid level in the liquid supply tank (61) based on an operation time of the pump (12) required to pump a gas volume from the liquid supply line (63), and further comprising a sensor (91) configured to determine whether the pump (12) is pumping liquid or gas, wherein the controller (16) is configured to measure the operation time of the pump (12) when the sensor (91) determines that the pump (12) is pumping gas and to stop measuring the operation time of the pump (12) when the sensor (91) determines that the pump (12) is pumping liquid.

## Patentansprüche

1. Getränkemaschine (100), umfassend:
einen Flüssigkeitszufuhrtank (61), der dazu konfiguriert ist, eine Flüssigkeit zum Ausbilden eines Getränks zu enthalten;
eine Pumpe (12), die in Fluidverbindung mit dem Flüssigkeitszufuhrtank (61) steht;
eine Flüssigkeitszufuhrleitung (63), die dazu konfiguriert ist, Flüssigkeit von dem Flüssigkeitszufuhrtank (61) für die Pumpe (12) bereitzustellen; wobei die Getränkemaschine **gekennzeichnet ist durch**
eine Entlüftungsöffnung (64), die in Fluidverbindung mit der Flüssigkeitszufuhrleitung (63) steht, um mindestens einen Abschnitt der Flüssigkeitszufuhrleitung (63) auf Umgebungsdruck zu entlüften, sodass für mindestens einige Füllstände des Flüssigkeitszufuhrtanks (61) ein Flüssigkeitsstand in der Flüssigkeitszufuhrleitung (63) auf einer gleichen Höhe wie ein Flüssigkeitsstand in dem Flüssigkeitszufuhrtank (61) ist; und
einen Sensor (91), der dazu konfiguriert ist, ein Vorhandensein und Fehlen von Flüssigkeit in der Flüssigkeitszufuhrleitung (63) zu erkennen.

2. Getränkemaschine (100) nach Anspruch 1, wobei die Pumpe (12) an oder über einem maximalen Füllstand des Flüssigkeitszufuhrtanks (61) positioniert ist.

3. Getränkemaschine (100) nach Anspruch 1, wobei die Entlüftungsöffnung (64) eine geöffnete Konfiguration und eine geschlossene Konfiguration aufweist.

4. Getränkemaschine (100) nach Anspruch 1, wobei die Entlüftungsöffnung (64) ein permanent offenes Loch ist.

5. Getränkemaschine (100) nach Anspruch 1, ferner umfassend eine Steuerung (16), die dazu konfiguriert ist, den Flüssigkeitsstand in dem Flüssigkeitszufuhrtank (61) auf Grundlage eines Gasvolumens in der Flüssigkeitszufuhrleitung (63) zu einem Beginn eines Getränkezyklus auf Grundlage einer Anzahl von Pumpzyklen zu bestimmen, die erforderlich sind, um das Gasvolumen aus der Flüssigkeitszufuhrleitung (63) zu pumpen, wobei die Getränkemaschine einen Sensor (91) enthält, der dazu konfiguriert ist, zu bestimmen, ob die Pumpe (12) Flüssigkeit oder Gas pumpt.

6. Getränkemaschine (100) nach Anspruch 1, ferner umfassend eine Steuerung (16), die dazu konfiguriert ist, den Flüssigkeitsstand in dem Flüssigkeitszufuhrtank (61) auf Grundlage einer Betriebszeit der Pumpe (12) zu bestimmen, die erforderlich ist, um ein Gasvolumen aus der Flüssigkeitszufuhrleitung (63) zu pumpen, und ferner umfassend einen Sensor (91), der dazu konfiguriert ist, zu bestimmen, ob die Pumpe (12) Flüssigkeit oder Gas pumpt, wobei die Steuerung (16) dazu konfiguriert ist, die Betriebszeit der Pumpe (12) zu messen, wenn der Sensor (91) bestimmt, dass die Pumpe (12) Gas pumpt, und das Messen der Betriebszeit der Pumpe (12) zu stoppen, wenn der Sensor (91) bestimmt, dass die Pumpe (12) Flüssigkeit pumpt.

## Revendications

1. Machine à boisson (100) comprenant :
un réservoir d'alimentation en liquide (61) conçu pour contenir un liquide destiné à former une boisson ;
une pompe (12) couplée fluidiquement au réservoir d'alimentation en liquide (61) ;
une conduite d'alimentation en liquide (63) conçue pour fournir du liquide allant du réservoir d'alimentation en liquide (61) à la pompe (12) ; la machine à boisson étant **caractérisée par**
un évent (64) couplé fluidiquement à la conduite d'alimentation en liquide (63) pour ventiler au moins une partie de la conduite d'alimentation en liquide (63) à la pression ambiante de sorte que, pour au moins certains niveaux de remplissage du réservoir d'alimentation en liquide (61), un niveau de liquide dans la conduite d'alimentation en liquide (63) soit à la même hauteur qu'un niveau de liquide dans le réservoir d'alimentation en liquide (61) ; et
un capteur (91) conçu pour détecter la présence et l'absence de liquide dans la conduite d'alimentation en liquide (63).

2. Machine à boisson (100) de la revendication 1, ladite pompe (12) étant positionnée au niveau ou au-dessus d'un niveau de remplissage maximal du réservoir d'alimentation en liquide (61).

3. Machine à boisson (100) de la revendication 1, ledit évent (64) comportant une configuration ouverte et une configuration fermée.

4. Machine à boisson (100) de la revendication 1, ledit évent (64) étant un orifice ouvert en permanence.

5. Machine à boisson (100) de la revendication 1, comprenant en outre un dispositif de commande (16) conçu pour déterminer le niveau de liquide dans le réservoir d'alimentation en liquide (61) sur la base d'un volume de gaz dans la conduite d'alimentation en liquide (63) au début d'un cycle de boisson sur la base d'un nombre de cycles de pompe requis pour pomper le volume de gaz hors de la conduite d'alimentation en liquide (63), la machine à boisson comprenant un capteur (91) conçu pour déterminer si la pompe (12) pompe du liquide ou du gaz.

6. Machine à boisson (100) de la revendication 1, comprenant en outre un dispositif de commande (16) conçu pour déterminer le niveau de liquide dans le réservoir d'alimentation en liquide (61) sur la base d'un temps de fonctionnement de la pompe (12) nécessaire pour pomper un volume de gaz à partir de la conduite d'alimentation en liquide (63), et comprenant en outre un capteur (91) conçu pour déterminer si la pompe (12) pompe du liquide ou du gaz, ledit dispositif de commande (16) étant conçu pour mesurer le temps de fonctionnement de la pompe (12) lorsque le capteur (91) détermine que la pompe (12) pompe du gaz et pour arrêter de mesurer le temps de fonctionnement de la pompe (12) lorsque le capteur (91) détermine que la pompe (12) pompe du liquide.
